(19) Europäisches Patentamt
European Patent Office
Office européen des brevets

(11) EP 3 248 461 A1

(12) EUROPEAN PATENT APPLICATION

(43) Date of publication:
29.11.2017 Bulletin 2017/48

(51) Int Cl.:
A01K 63/04 (2006.01)     E02B 1/00 (2006.01)
F04D 15/00 (2006.01)     F04D 15/02 (2006.01)

(21) Application number: 17173202.7

(22) Date of filing: 29.05.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 27.05.2016  GB 201609428

(71) Applicant: Murray, Ian
Shotley Bridge, County Durham DH8 0HA (GB)

(72) Inventor: Murray, Ian
Shotley Bridge, County Durham DH8 0HA (GB)

(74) Representative: Archer, Graham John
Archer-IP Ltd
Northern Design Centre
Abbott's Hill
Gateshead
Newcastle upon Tyne NE8 3DF (GB)

(54) AN APPARATUS FOR PROTECTING AQUATIC ANIMALS FROM A WATER PUMPING DEVICE

(57) An apparatus for protecting aquatic animals, particularly elver the juvenile form of the eel, from a water pumping device is disclosed. The apparatus includes a screen with a multiplicity of apertures of predetermined size which allow water to pass from an outer side to an inner side before reaching a water pump. There is a first sensor for measuring the water level on either the inner or outer sides of the screen and a second sensor for determining the difference between the water level on the inner and outer sides of said screen. The apparatus further includes a processor for controlling the pumping rate of the pump varying the rate of pumping depending on the water level measured and on the difference between the water levels.

Fig 1.

**Description**

The present invention relates to a water pumping device and to an apparatus for protecting aquatic animals from such a device and relates particularly, but not exclusively, to a device for protecting eels from being drawn into water pumps.

It is commonplace for water to be pumped from one watercourse to another using large electrically powered water pumps. For example, in flat landscapes, such as fen land, it is well known to pump water from one drainage river to another in order to assist water flowing to the sea and to prevent flooding. The pumping of water from a watercourse is also known for other reasons including for crop irrigation and for production of potable water. However, such pumps will damage anything which passes through them and can be particularly damaging to aquatic life with large and small invertebrate animals being killed by a pumps impeller. When such pumps are operating and drawing in large volumes of water aquatic animals passing close to the pump inlet can easily be drawn into the pump.

Solutions to this problem have been suggested including pumps which do not include an impeller and therefore do not damage the aquatic animals. However, such pumps are often slow and inefficient making them unsuitable for use in many operations.

Alternative solutions include putting screens or cages around the pump and pump inlet. However, such screens often do not protect small aquatic animals such as elver (the young offspring of eels). Screens with very small holes can lead to inefficient pumping or the screens must be very large and situated a long distance from the pump inlet. These screens become ineffective if part of the screen becomes blocked (referred to as "blinding the screen") as the rate of the draw of water through the screen increases. If the speed of the water through the screen is faster than the speed that an animal can swim away from the screen then they can killed by being crushed up against the screen.

Preferred embodiments of the present invention seek to overcome or alleviate the above described disadvantages of the prior art.

According to an aspect of the present invention there is provided an apparatus for protecting aquatic animals from a water pumping device, the apparatus comprising:-

a screen with a multiplicity of apertures of predetermined size, the screen allowing water to pass from an outer side to an inner side of said screen through said apertures before reaching a water pump;

at least one first water level sensor for measuring the water level on one of the inner and outer sides of said screen;

at least one second sensor used for determining the difference between the water level on the inner and outer sides of said screen; and

a processor for controlling the pumping rate of said pump wherein said processor varies the rate of pumping depending on the water level measured and on the difference between the water levels.

By varying the rate of pumping dependent on water levels and the difference between water levels, the advantage is provided that the apparatus can ensure that the flow rates through the apertures do not exceed predetermined values thereby protecting animals from being drawn through the screen and into the pump. As a result, a standard type of impeller driven pump, which is efficient, robust and very familiar to person skilled in the art, can be used in pumping from or between watercourses whilst ensuring the pump is safe and meets stipulated requirements for ensuring the safety of aquatic animals. Furthermore, the apparatus ensures that the pump is protected from operating when water levels are too low.

In a preferred embodiment the screen comprises a cage surrounding said inlet.

In another preferred embodiment the processor sends a signal in response to changes in said water levels to vary the rate of pumping.

In a further preferred embodiment the processor uses a look-up table to determine said pumping rate.

According to another aspect of the present invention there is provided a water pumping system comprising:-

an apparatus as set out above; and

a pump operating under the control of said apparatus.

Preferred embodiments of the present invention will now be described, by way of example only, and not in any limitative sense with reference to the accompanying drawings in which:-

Figure 1 is a schematic representation of an apparatus of an embodiment of the present invention; and

Figure 2 is a schematic representation of an apparatus of an alternative embodiment of the present invention.

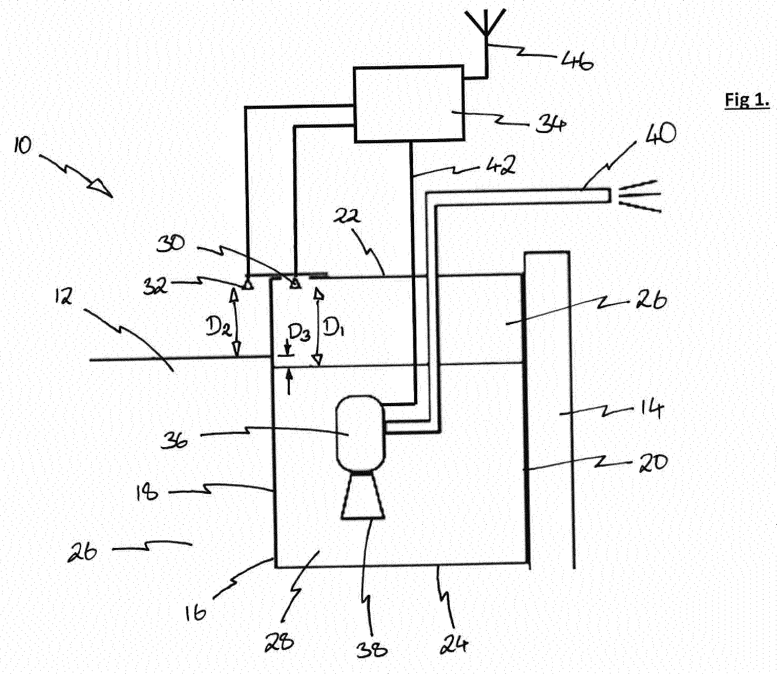

Referring firstly to Figure 1, this image schematically depicts an apparatus 10 of the present invention used in a watercourse generally indicated at 12 which can be any body of water from which pumping is to take place but is most typically a river, lake or reservoir. A boundary of the watercourse is represented by a wall 14 in figure 1. This wall 14 could be a bank of the watercourse 12 or could be part of a pumping house or other building which associated with the pumping of water from the watercourse. The apparatus 10 includes a screen in the form of a cage 16. The schematic representation in figure 1 shows the cage 16 in cross-section being formed from a plurality of panels. These panels include side panels 18 and 20 top and bottom panels 22 and 24 a rear panel 26 and a front panel which is not shown due to the cross-section. One or more of these panels includes a multiplicity of apertures which allow water of the watercourse 12 to pass from an outer side of the cage 26 to an inner side 28. It is not essential that all of the panels that make up the cage 16 have apertures in them. For example, the panel 20 which is shown engaged with wall 14 would typically not include apertures due to the complex flow of water to pass through such apertures. Likewise the top panel 22 may not contain apertures if this panel is generally not immersed in water except at times of extreme flooding. The bottom panel 24 may not be perforated with apertures if it is located close to the bed of a watercourse and likely to become blocked. The multiplicity of apertures in the panels are preferably of substantially the same size although it is possible that variations in aperture size are included although the size of the largest apertures must be known.

The apparatus 10 also includes a first sensor in the form of a first water level sensors 30 and a second sensor in the form a second water level sensor 32. The first water level sensor 30 is located on the inner side 28 of cage 16 and the second water level sensor 32 is located on the outer side 26. These sensors 30 and 32 measure the distance from the sensor to the water below the sensor to obtain distances D1 and D2 from which can be calculated a difference in water level D3.

The apparatus 10 further includes a processor 34 for controlling a pump 36 which itself has an inlet 38 located within the inner side 28 of the watercourse 12 in cage 16. The pump 36 pumps water via pipework 40 from the watercourse 12 in response to signals sent by the controller 34 along signal pathway 42 (typically a cable). The outflow from the pipework 40 is at a known fixed height and is not submerged into another watercourse. In particular, the controller 34 determines the rate at which pump 36 should operate to pump water thereby controlling the rate at which water flows into the pump inlet 38. This rate is determined by processor 34 depending upon the water levels measured by either or both of the water level sensors 30 and 32, which are derived from distances D1 and D2, and by the difference between those levels, that is D3. In particular, an increased difference D3, between levels D1 and D2, indicates that apertures of the cage 16 have become blocked. This prevents water from flowing through these apertures and causes the rate of flow through the other apertures to increase risking that the rate of flow through the open apertures is greater than the requirements stipulated for that pumping device in order to ensure the safety of animals in the watercourse. The processor 34 is provided with a transmitter 46 which can transmit data to an externally located operator or monitoring system. The transmitter 46 can be any suitable transmitter including a radio transmitter or wired or wireless transmission via the Internet.

Operation of the apparatus of the present invention will now be described. The first stage of operation of the apparatus 10 is the setup. This can be done either on an individual basis for bespoke pump and screen arrangements or if identical systems are being installed in different locations the initial setup for one pump and screen arrangement can be used when the same system is installed in different locations. The purpose of the setup is to create a look up table which the processor 34 uses to control the operating speed of the pump 36. The lookup table is programmed with the maximum difference between the outside water level D2 and the inside water level D1 for a range of pump speeds and over a range of outside water levels to ensure that the impingement velocity, that is the velocity at which water flows through the apertures of the cage 16, is not exceeded. On the basis of the lookup table the correct pump speed can be set for a given outside water level, total dynamic head and the difference in water level.

To create the lookup table the pump is operated at a series of pump speeds, total dynamic heads and water levels. At each of these settings the flow rate is measured and/or calculated and at that pump flow rate the minimum surface area of the screen is calculated which would give the maximum allowable impingement velocity through the apertures. The flow rate can be measured using a flow meter between the pump and the outlet although it should be noted that since flow meters are prone to malfunction or causing blockages in pipework a calculated flow rate is preferable. Calculated flow rate is determined using lookup tables provide by the pump manufacturer together with information about the pipework leading to and from the pump.

For each of these settings (pump speeds, total dynamic head, water levels and flow rate) the impingement velocity is calculated and then portions of the cage are blocked off until the maximum allowable impingement velocity is reached. The screen surface area is then reduced for example by placing a board or other sheet material against the side of the cage to reduce the surface area, with open apertures through which water can flow, by a known amount. This reduction in the number of apertures through which water can flow will cause the water level D1 inside the cage to drop slightly resulting in an increase in the difference D3 between the outside water level D2 and the internal water level D1. As a result, for a given outside water level and water level difference a maximum pump speed can be determined from the lookup table for a total dynamic head.

The Total Dynamic Head is defined as the total equivalent height that a fluid is to be pumped, taking into account friction losses in the pipe. In other words:

```
Total Dynamic Head = Static Height + Static Lift + Friction Loss
```

where:

Static Height is the maximum height reached by the pipe after the pump (also known as the 'discharge head').
Static Lift is the height the water will rise before arriving at the pump (also known as the suction head).
Friction Loss (also known as Head Loss) can be derived from Bernoulli's Equation.

In the example shown in Figure 1 the Static lift is zero as the pump is submerged. The Total Dynamic Head is therefore calculated for fixed outlet into the air as:-

```
Static Height + Static Lift = distance between inside water
level (measured by D1) and known height of the discharge pipe.
```

The Friction Loss is calculated by using a lookup table vs flow rate as Frictional Loss increases as flow rate increases.

Table 1

| Pump speed | Total dynamic head | Outside water level (D2) | Maximum water level difference (D3) |
|---|---|---|---|

In other words, as the difference between the water levels D3 increases this suggests that some of the apertures are becoming blocked and the pump speed, for the total dynamic head at that moment, can be reduced (or the pump simply switched off ) to ensure that the impingement velocity through the apertures does not exceed the maximum allowable.

Once this lookup table has been developed for a particular screen or cage it can then be applied to any pump which operates within the same flow rate limits as the test pump. This is because the parameter which controls the water level difference D3 is the pump flow rate. This flow rate is difficult to measure but manufacturers provide tables and calculation tools to work out the flow rate for a particular pump speed and total dynamic head. As a result, table 1 can be replaced with the following table.

Table 2

| Pump flow (1/s) | Outside water level (D2) | Maximum water level difference (D3) |
|---|---|---|

Table 2 is then used to set the flowrate of the pump. The water levels D1 and D2 are measured and the water level difference D3 is calculated. Using the water level D1 and the water level difference D3 the table is used to look up the maximum pump flow rate and the processor 34 a signal to the pump 36 via connection 42 to set the flowrate accordingly. In the event of any changes to the water levels D1 and D2 the processor 34 uses table 2 to determine whether the flowrate should change.

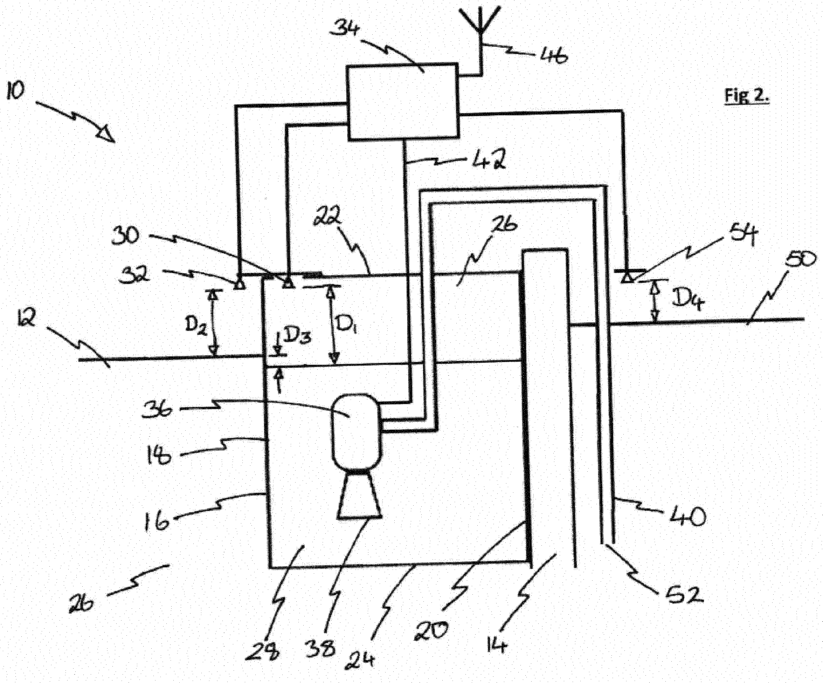

Referring to figure 2, this image shows an alternative embodiment of the present invention and is a variation on that shown in figure 1. This variation results from the pump discharging directly into a receiving watercourse 50 with an outlet 52 of the pipework 40 being submerged in watercourse 50. A consequence of this is that the work required of pump 36 to move a given volume of water to receiving watercourse 50 varies depending on the level of the receiving watercourse relative to the outlet 52. As a result, a third water level sensor 54 is required to measure the distance D4 from the sensor to the water surface to determine the difference between the water level inside the screen and the water level in the receiving watercourse. This is used to calculate the total dynamic head which varies with changes in the levels. As set out above,

$$\texttt{Total Dynamic Head = Static Height + Static Lift + Friction Loss}$$

For a submerged outlet with variable water level:

$$\texttt{(Static Height + Static Lift) = distance between inside water}$$
$$\texttt{level (measured by D1) and receiving water course level}$$
$$\texttt{(measured by D4).}$$

The Friction Loss is calculated by using a lookup table vs flow rate. As previously mentioned Frictional Loss increases as flow rate increases.

It will be appreciated by persons skilled in the art that the above embodiments have been described by way of example only and not in any limitative sense, and that various alterations and modifications are possible without departure from the scope of the protection which is defined by the appended claims. For example, only one of the first and second sensors 30 and 32 needs to be a water level sensor as the function of the other sensor is to determine the difference in the water level between the inside and the outside of the cage. However, the most practical way to achieve this is to have a pair of water level sensors, one of the inside and one on the outside of the cage. The example of water level sensors described above are ultrasonic water level sensors although any other suitable sensor could be used including but not limited to conductive probes and the like.

However, as an alternative a pressure sensor at a fixed location can be used to determine the level of the water above the sensor. For example, a pressure sensor placed in water can be considered to be measuring the weight of water sitting above the sensor and this can be equated to the height of the water. Furthermore, if pressure sensors replace the level sensors throughout the system the lookup tables can be based on pressure rather than water levels.

The apparatus may be used in a closed system where it is not initially discharging into an open body of water. An example of such a closed systems is the transfer of water into water pipelines. In these circumstances the total dynamic head can be calculated by measuring the pressure in the pipework 40.

**Claims**

1.   An apparatus for protecting aquatic animals from a water pumping device, the apparatus comprising:-
    a screen with a multiplicity of apertures of predetermined size, the screen allowing water to pass from an outer side to an inner side of said screen through said apertures before reaching a water pump;
    at least one first sensor for measuring the water level on one of the inner and outer sides of said screen;
    at least one second sensor used for determining the difference between the water level on the inner and outer sides of said screen; and
    a processor for controlling the pumping rate of said pump wherein said processor varies the rate of pumping depending on the water level measured and on the difference between the water levels.

2.   An apparatus according to claim 1, wherein said screen comprises a cage surrounding said inlet.

3.   An apparatus according to claim 1 or 2, wherein said at least one second sensor measures the water level on the other of the inner and outer sides of said screen to determine said difference.

4.   An apparatus according to any of the preceding claims, further comprising at least one third sensor for measuring the water level relative to an outlet pipe connected to said pump.

5.   An apparatus according to any of claims 1 to 3, further comprising at least one flow measuring means for measuring the output flow after said pump.

6.   An apparatus according to any of the preceding claims, wherein said processor sends a signal in response to changes in said water levels to vary the rate of pumping.

7.   An apparatus according to any of the preceding claims, wherein said processor uses a look-up table to determine said pumping rate.

8. An apparatus according to any of the preceding claims, wherein said water level sensor comprises a pressure sensor for measuring the water pressure data from which allows a water level to be determined.

9. A water pumping system comprising:-

   an apparatus according to any of the preceding claims; and
   a pump operating under the control of said apparatus.

Fig 1.

EP 3 248 461 A1

Fig. 2.

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2004 232379 A (NISHI NIPPON PLANT KOGYO KK; KYUSHU ELECTRIC POWER) 19 August 2004 (2004-08-19) * the whole document * | 1 | INV. A01K63/04 E02B1/00 F04D15/00 F04D15/02 |
| A | US 2009/314722 A1 (KELLY SCOTT [US] ET AL) 24 December 2009 (2009-12-24) * paragraph [0011] - paragraph [0069] * * figures 1-5 * | 1 | |
| A | EP 2 206 914 A1 (JANK SIEGFRIED [AT]) 14 July 2010 (2010-07-14) * paragraph [0035] - paragraph [0068] * * figure 1 * | 1 | |

TECHNICAL FIELDS
SEARCHED      (IPC)

A01K
E02B
F04D

The present search report has been drawn up for all claims

| Place of search | Date of completion of the search | Examiner |
|---|---|---|
| The Hague | 5 October 2017 | Millward, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 17 3202

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2017

| Patent document cited in search report | | Publication date | Patent family member(s) | | Publication date |
|---|---|---|---|---|---|
| JP 2004232379 | A | 19-08-2004 | JP 3899040 | B2 | 28-03-2007 |
| | | | JP 2004232379 | A | 19-08-2004 |
| US 2009314722 | A1 | 24-12-2009 | CA 2669442 | A1 | 23-12-2009 |
| | | | US 2009314722 | A1 | 24-12-2009 |
| | | | US 2010147772 | A1 | 17-06-2010 |
| EP 2206914 | A1 | 14-07-2010 | NONE | | |

EPO FORM P0459

For more details about this annex : see Official Journal of the European Patent Office, No. 12/82